# EUROPEAN PATENT SPECIFICATION

(11) **EP 4 008 534 B1**
(45) Date of publication and mention of the grant of the patent: **18.06.2025**
(21) Application number: 20211522.6
(22) Date of filing: 03.12.2020
(51) Int. Cl.: B29C 70/44, B29D 99/00, B29C 33/30, B29C 70/54, B29C 33/48, F03D 1/06, B29L 31/08

(54) **METHOD OF MANUFACTURING A SPAR CAP FOR A WIND TURBINE BLADE**
VERFAHREN ZUR HERSTELLUNG EINER HOLMKAPPE FÜR EIN WINDTURBINENBLATT
MÉTHODE DE FABRICATION D'UN CHAPEAU DE LONGERON D'UNE PALE D'ÉOLIENNE

(43) Date of publication of application: 08.06.2022
(73) Proprietor: LM Wind Power A/S, 6000 Kolding (DK)
(72) Inventor: ARIAS, Maria, 6000 Kolding (DK)
(74) Representative: COPA Copenhagen Patents

(56) References cited:
- EP-A1- 2 308 670
- WO-A1-2011/113812
- WO-A2-2014/096004
- CN-A- 103 640 231
- DE-A1- 102012 223 707
- US-A1- 2011 146 906

## Description

### Field of the Invention

The present invention relates to a method of manufacturing a spar cap for a wind turbine blade.

### Background of the Invention

Wind power provides a clean and environmentally friendly source of energy. Wind turbines usually comprise a tower, generator, gearbox, nacelle, and one or more rotor blades. The wind turbine blades capture kinetic energy of wind using known airfoil principles. Modern wind turbines may have rotor blades that exceed 90 meters in length.

Wind turbine blades are usually manufactured by forming two shell parts or shell halves from layers of woven fabric or fibre and resin. Spar caps, which are also called main laminates, are placed or integrated in the shell halves and may be combined with shear webs or spar beams to form structural support members. Spar caps or main laminates may be joined to, or integrated within, the inside of the suction side and pressure side halves of the shell.

As the size of wind turbine blades increases, various challenges arise from such blades being subjected to increased forces during operation, requiring improved reinforcing structures. In some known solutions, pultruded fibrous strips of material are used. Pultrusion is a continuous process in which fibres are pulled through a supply of liquid resin and then heated in an open chamber where the resin is cured. Such pultruded strips can be cut to any desired length.

DE 10 2012 223 707 A1 discloses a shaping device for producing a T-rod for a rotor blade of a wind turbine, which has a web support section and at least one T-shaped web foot section provided at one end of the web support section, wherein the shaping device comprises a main shape and at least one insert.

EP 2 308 670 A1 discloses a fixing device for fixating a segment of a wind turbine blade to a mold, wherein the blade segment has a fixating portion. The fixing device comprises: a first portion for removably fixating the blade segment at its fixating portion to the mold and a second portion for fixating the fixing device to the mold.

WO 2011/113812 A1 discloses a method for manufacturing a composite material article, comprising providing a mould, placing at least one layer of bulk fiber material on the mould, placing, at an edge of the bulk fiber material layer, a flange element partially overlapping the bulk fiber material layer, and partially extending so as to form a flange, and curing bulk resin on the mould.

WO 2014/096004 A2 relates to a method of manufacturing an aerodynamic shell part for a wind turbine blade, comprising providing a first mould part, laying up fibre-reinforcement material and optionally also sandwich core material in the first mould, arranging one or more inserts having an exterior shape corresponding to at least sides of the recess of the aerodynamic shell part, and supplying resin to said fibre-reinforcement material and optional sandwich core material.

However, the manufacturing of large reinforcing structures, such as spar caps, can be challenging. In particular, many limitations still exist in the ability to stay within required tolerances during known processes for manufacturing spar caps. Also, some known spar cap moulding methods are quite tedious and ineffective, and may result in undesired damage to the pultruded elements when demoulding the spar cap from the spar cap mould. Other potential problems include wrinkle formation, unsatisfactory resin impregnation or air pockets formed during known moulding processes for forming spar caps.

It is therefore an object of the present invention to provide an improved method of manufacturing a spar cap for a wind turbine blade, which is more efficient and less time-consuming.

It is another object of the present invention to provide an improved method of manufacturing a spar cap for a wind turbine blade, which leads to less damage of the spar cap.

It is another object of the present invention to provide an improved method of manufacturing a spar cap for a wind turbine blade that minimises wrinkle formation, unsatisfactory resin impregnation or air pockets formed during the manufacturing process.

### Summary of the invention

It has been found that one or more of the aforementioned objects can be obtained by providing a method of manufacturing a fibre-reinforced spar cap for a wind turbine blade, the method comprising the steps of providing a mould, fastening a first guide member and a second guide member to the mould for providing a moulding cavity in between the first and second guide members, arranging a fibre material within the moulding cavity, such that a first gap is provided between the fibre material and the first guide member, and a second gap is provided between the fibre material and second guide member, placing a vacuum foil over the fibre material and the first and second guide members, such that the vacuum foil extends into the first and second gap, inserting a first insert into the first gap on top of the vacuum foil, inserting a second insert into the second gap on top of the vacuum foil, infusing resin into the fibre material to form a fibre-reinforced polymer, curing the resin-infused fibre material to form the fibre-reinforced spar cap, removing the first and second inserts and the vacuum foil, and demoulding the fibre-reinforced spar cap from the mould.

It was found that this solution allows for less tight tolerance requirements for the mould and the guide members, leading to faster production cycles and easier handling. In particular, it was found that the method of the present invention results in a considerably facilitated demoulding step of the spar cap, thus reducing damage to the spar cap.

The wind turbine blade usually has a pressure side and a suction side, and a leading edge and a trailing edge with a chord having a chord length extending therebetween, the wind turbine blade extending in a spanwise direction between a root end and a tip end. Usually, one or more spar caps can be installed in the pressure side shell half and in the suction side shell half of the blade, and a flapwise extending shear web can be arranged in between the opposing spar caps of the two shell halves. Usually, the pressure side shell half and the suction side shell half are manufactured over the entire length of the wind turbine blade, i.e. over their entire final length. The pressure side shell half and the suction side shell half will typically be adhered or bonded to each other near the leading edge and near the trailing edge. Each shell half may comprise longitudinally/spanwise extending spar caps, also called main laminates, preferably comprising reinforcement fibres such as glass fibres, carbon fibres, aramid fibres, metallic fibres, such as steel fibres, or plant fibres, or mixtures thereof. The shell halves will typically be produced by infusing a fibre lay-up of fibre material with a resin such as epoxy, polyester or vinyl ester. The spar caps or main laminates are usually affixed to the inner faces of the shell halves.

Typically, the spar cap, or the fibre material arranged in the spar cap mould prior to resin infusion, has a longitudinally extending top surface and an opposing longitudinally extending bottom surface, and first and second longitudinally extending lateral surfaces. The distance between the top and bottom surface usually defines the thickness of the spar cap. The top and bottom surfaces of the spar cap are typically vertically separated, whereas the first and the second lateral surfaces are transversely separated. The spar cap can have the shape of a rectangular plate or a slab. The spar cap usually has a rectangular shaped cross-section when sectioned normally to the longitudinal or spanwise extension.

It is preferred that the spar cap of the present invention comprises a plurality of strips of pultruded fibre material, extending generally in a longitudinal/spanwise direction of the spar cap. The pultruded strips of the spar cap preferably have a length of at least 30 meters, such as at least 40 meters, or at least 50 meters. In some embodiments, each strip contains a carbon fibre material. In other embodiments, each strip contains a glass fibre material. In other embodiments, each strip contains a glass fibre material and a carbon fibre material. In some embodiments, the strips may not contain any polymer when laying up the strips in the spar cap mould.

The mould is typically a spar cap mould having an upper surface including a moulding surface. Usually, the mould will extend along a longitudinal direction, with a length of at least 20 meters. The mould may be made of or comprise a composite material and/or may comprise a metal material. The first guide member and the second guide member are fastened, preferably releasably fastened, to the mould for providing a moulding cavity in between the first and second guide members. The first guide member may extend in the longitudinal direction of the mould closer to a first edge of the mould, and the second guide member may extend in the longitudinal direction of the mould closer to the second edge of the mould. It is preferred that the first and second guide members extend along the longitudinal direction of the mould, substantially parallel to each other. For example, the first guide member may extend along a first lateral edge of the spar cap or fibre material, the first lateral edge of the spar cap or fibre material facing the trailing edge of the blade when arranged in the blade shell, and the second guide member may extend along a second lateral edge of the spar cap or fibre material, the second lateral edge of the spar cap or fibre material facing the leading edge of the blade when arranged in the blade shell. In a preferred embodiment, the first guide member and the second guide member are guide rails.

In a preferred embodiment, each guide member comprises an upstand, such as an upright structure or substantially vertically extending structure, forming the longitudinally extending guide surface. In a preferred embodiment, each of the guide members has a substantially L-shaped cross section, or a skewed or compressed L-shaped cross section. In another preferred embodiment, the guide members have a triangular cross section. In other embodiments, the guide members have a prism cross section. It is preferred that each guide member has substantially horizontal section, which can be fastened to the mould, and a substantially vertical section extending from the mould in a substantially vertical or upward direction. In other embodiments, each of the guide members has a triangular cross section.

In a preferred embodiment, the first and second guide members extend along the longitudinal direction of the mould, preferably substantially parallel to the lateral edges of the mould. Thus, it is preferred that the first and second guide members extend along substantially the entire length of the mould, and preferably along substantially the entire length of the spar cap. In some embodiments, the insert may have a length of at least 25 meters, such as at least 50 meters or at least 70 meters. In a preferred embodiment, the first and second guide members are bolted to the mould. Thus, one or more bolts can be inserted into each guide member, preferably extending into receiving holes in the mould. In other embodiments, the guide members can be fastened to the mould by one or more screws, adhesives, snap connections, or other fastening means.

In a preferred embodiment, the transverse distance between the first and second guide members is at least 1 metre, such as at least 5 metres or at least 8 meters. Usually, the transverse distance between the two guide members at the moulding surface should accommodate more than the width of the spar cap to be manufactured, such as at least an additional 5% or an additional 10% as compared to the width of the spar cap or fibre material arranged in between the guide members.

A fibre material is arranged within the moulding cavity, usually in between and along the first and second guide members, such that a first gap is provided between the fibre material and the first guide member, preferably at the moulding surface, and a second gap is provided between the fibre material and second guide member, preferably at the moulding surface. It is preferred that the respective gaps increase in width when moving from the moulding surface in an upward directions. Thus, the respective gaps may be substantially V-shaped or substantially wedge-shaped. In some embodiments, the transverse distance between the fibre material and the respective guide member is between 1 and 100 mm, preferably between 1 and 50 mm, at the moulding surface. The transverse distance between the fibre material and the respective guide member preferably increases when moving upwardly from the moulding surface. At the top surface of the fibre material, the transverse distance between the fibre material and the respective guide member is preferably between 10 and 1000 mm, such as between 20 and 500 mm.

The fibre material may comprise dry fiber fabrics, prepreg fiber materials and/or pultruded rods or strips of fibre material, such as one or more strips of carbon fibre pultrusions. In a preferred embodiment, the fibre material comprises a plurality of strips of fibre material arranged into adjacent stacks of strips. Each stack of strips may comprise 2-30, such as 3-20 strips, e.g. strips of pultruded fibre material, successively arranged on top of each other. Thus, each stack will usually extend in a longitudinal/spanwise direction of the spar cap. In a preferred embodiment, the strips comprise pultruded strips, preferably pultruded strips comprising a fibre material, preferably carbon fibres.

In a preferred embodiment, the first guide member comprises a longitudinally extending guide surface, and the second guide member comprises a longitudinally extending guide surface facing the guide surface of the first guide member, the guide surface of the first guide member diverging from the guide surface of the second guide member in an upward direction. It is thus preferred that the respective guide surfaces together form a funnel shape towards the moulding surface. In other words, the guide surface of the first guide member may diverge from the guide surface of the second guide member in an upward direction, the planes in which the respective guide surfaces 65, 67 lie forming an angle. Said angle is preferably not larger than 90°, more preferably not larger than 45°.

In a preferred embodiment, the spar cap has first and second longitudinally extending lateral surfaces, wherein the first guide member comprises a longitudinally extending guide surface forming an acute angle with the first lateral surface of the spar cap, and wherein the second guide member comprises a longitudinally extending guide surface forming an acute angle with the second lateral surface of the spar cap. Said respective acute angles are preferably not larger than 45°.

A vacuum foil is placed over the fibre material and the first and second guide members, such that the vacuum foil extends into the first and second gap. Thus, the vacuum foil is preferably arranged between the guide members and the fibre material, held in place by the inserts. The vacuum foil may be any vacuum-tight film. Lateral sealing of the moulding cavity can be ensured by applying an adhesive film or roll at the side of the mould, such as tacky tape.

A first insert is inserted into the first gap on top of the vacuum foil, and a second insert is inserted into the second gap on top of the vacuum foil. Thus, typically the vacuum foil will be pushed into the respective gaps when inserting the inserts, such that the inserts are placed above the vacuum foil, i.e. outside of the moulding cavity into which resin is infused. It is particularly preferred the first and second inserts are rigid inserts. The inserts are preferably wedge-shaped, i.e. tapering to a thin edge at one end thereof. The inserts can be made of a polymer material, e.g. a polymer material comprising silicone. In one embodiment, the inserts are 3-d printed. In a preferred embodiment, each insert comprises a silicone material. In a preferred embodiment, each insert comprises high density polyethylene (HDPE) and a silicone material. In a preferred embodiment, the insert is substantially wedge-shaped. In a preferred embodiment, the insert has a triangular cross section or a trapezoid cross section. Thus, in some embodiments, the insert may have a length of at least 10 meters, such as at least 20 meters or at least 50 meters, with a triangular or trapezoid cross section. In a preferred embodiment, the inserts extend along substantially the entire length of the spar cap. It is preferred that the insert tapers towards one end as seen in its cross section. The tapered end of the insert is preferably the end that is inserted into the gap.

In a preferred embodiment, the first insert is squeezed into the first gap, and the second insert is squeezed into the second gap. This will typically be done by a substantially vertical, downward movement of the rigids into the respective gap. Advantageously, thereby the vacuum foil is squeezed into the respective gaps.

Resin, for example an epoxy resin, is infused into the fibre material to form a fibre-reinforced polymer, followed by curing the resin-infused fibre material to form the fibre-reinforced spar cap, and removing the first and second inserts and the vacuum foil. The resin infusion is step is preferably performed by Vacuum Assisted Resin Transfer Moulding (VARTM), wherein the vacuum foil or vacuum bag is arranged on top of the fibre material, sealing against the mould, thereby forming a mould cavity containing the fibre material of the spar cap. Resin inlets and vacuum outlets can be connected to the mould cavity. Typically, the mould cavity is evacuated via the vacuum outlets so as to form negative pressure in the mould cavity. In a preferred embodiment, this is done prior to the step of inserting the first and second inserts into the respective gap. This helps consolidating the fibre material and sucking the vacuum foil into the gaps. Once the inserts are inserted, liquid resin can be supplied typically via resin inlets. The resin can thus be forced into the mould cavity due to the pressure differential and impregnates the fibre material of the spar cab. When the fibre material has been fully impregnated, the resin is cured in order to form the final spar cap.

Then, the fibre-reinforced spar cap can be demoulded from the mould. The demoulding step can be carried out particularly efficiently when the guide surface of the first guide member diverges from the guide surface of the second guide member in an upward direction, creating a funnel-shaped upwardly open space, from which the spar cap can be demoulded without substantial damage.

In another aspect, the present invention relates to a mould assembly for manufacturing a fibre-reinforced spar cap for a wind turbine blade, the mould assembly comprising a mould, a first guide member comprising an upstand and a second guide member comprising an upstand, the first and second guide members being fastened to the mould for providing a moulding cavity in between the first and second guide members, a fibre material arranged within the moulding cavity, such that a first gap is provided between the fibre material and the first guide member, and a second gap is provided between the fibre material and second guide member, a vacuum foil placed over the fibre material and the first and second guide members, such that the vacuum foil extends into the first and second gap, a first wedge-shape insert for insertion into the moulding cavity, wherein the first wedge-shape insert is inserted into the first gap on top of the vacuum foil, and a second wedge-shape insert for insertion into the moulding cavity, wherein the second wedge-shape insert is inserted into the second gap on top of the vacuum foil. The mould, the first and second guide members and the first and second wedge-shaped inserts may have the same properties as discussed in the above-recited embodiments and examples.

In particular, each of the guide members may have a substantially L-shaped cross section, or a skewed or compressed L-shaped cross section. In another preferred embodiment, the guide members have a triangular cross section. In other embodiments, the guide members have a prism cross section. It is preferred that each guide member has substantially horizontal section, which can be fastened to the mould, and a substantially vertical section extending from the mould in a substantially vertical or upward direction. In other embodiments, each of the guide members has a triangular cross section. In a preferred embodiment, the first and second guide members extend along the longitudinal direction of the mould, preferably substantially parallel to the lateral edges of the mould. Thus, it is preferred that the first and second guide members extend along substantially the entire length of the mould, and preferably along substantially the entire length of the spar cap. In some embodiments, the insert may have a length of at least 25 meters, such as at least 50 meters or at least 70 meters. In a preferred embodiment, the first and second guide members are bolted to the mould. Thus, one or more bolts can be inserted into each guide member, preferably extending into receiving holes in the mould. In other embodiments, the guide members can be fastened to the mould by one or more screws, adhesives, snap connections, or other fastening means.

In a preferred embodiment, each insert comprises a silicone material. In a preferred embodiment, each insert comprises high density polyethylene (HDPE) and a silicone material. In a preferred embodiment, the insert is substantially wedge-shaped. In a preferred embodiment, the insert has a triangular cross section or a trapezoid cross section. Thus, in some embodiments, the insert may have a length of at least 10 meters, such as at least 20 meters or at least 50 meters, with a triangular or trapezoid cross section. It is preferred that the insert tapers towards one end as seen in its cross section.

In another aspect, the present invention relates to a wind turbine blade comprising a spar cap according to the present invention. In another aspect, the present invention relates to a method of manufacturing a wind turbine blade having a profiled contour including a pressure side and a suction side, and a leading edge and a trailing edge with a chord having a chord length extending therebetween, the wind turbine blade extending in a spanwise direction between a root end and a tip end, the method comprising the steps of manufacturing one or more spar caps according to the method of the present invention, arranging a plurality of blade components in a blade mould, assembling the one or more spar caps in the blade mould relative to the plurality of blade components, the spar cap comprising a plurality of strips of fibre material arranged into adjacent stacks of strips, and infusing resin into the one or more spar caps and the plurality of blade components to form a wind turbine blade shell part.

All features and embodiments discussed above with respect to the method of manufacturing a fibre-reinforced spar cap of the present invention likewise apply to the mould assembly, to the spar cap, and to the method of manufacturing a wind turbine blade of the present invention, and vice versa.

According to another aspect, the present invention relates to a wind turbine blade obtainable by the method according to the present invention.

As used herein, the term "spanwise" is used to describe the orientation of a measurement or element along the blade from its root end to its tip end. In some embodiments, spanwise is the direction along the longitudinal axis and longitudinal extent of the wind turbine blade.

As used herein, the term "longitudinal" generally means a direction running parallel to the maximum linear dimension, typically the longitudinal axis, of, for example the spar cap or the spar cap mould. The longitudinal direction of the spar cap usually coincides with the spanwise direction of the blade, when the spar cap is arranged within the blade.

### Brief description of the figures

The invention is explained in detail below with reference to an embodiment shown in the drawings, in which
Fig. 1 shows a wind turbine,
Fig. 2 shows a schematic view of a wind turbine blade,
Fig. 3 shows a schematic view of a cross-section of a wind turbine blade,
Fig. 4 is a schematic perspective drawing illustrating various steps of the method of the present invention,
Fig. 5 is a schematic perspective drawing illustrating various steps of the method of the present invention, and
Fig. 6 is a schematic perspective drawing illustrating various steps of the method of the present invention,
Fig. 7 is a cross sectional view taken along the line A-A' in Fig. 4,
Fig. 8 is a cross sectional view taken along the line A-A' in Fig. 5, and
Fig. 9 is a cross sectional view taken along the line A-A' in Fig. 6.

### Detailed description of the figures

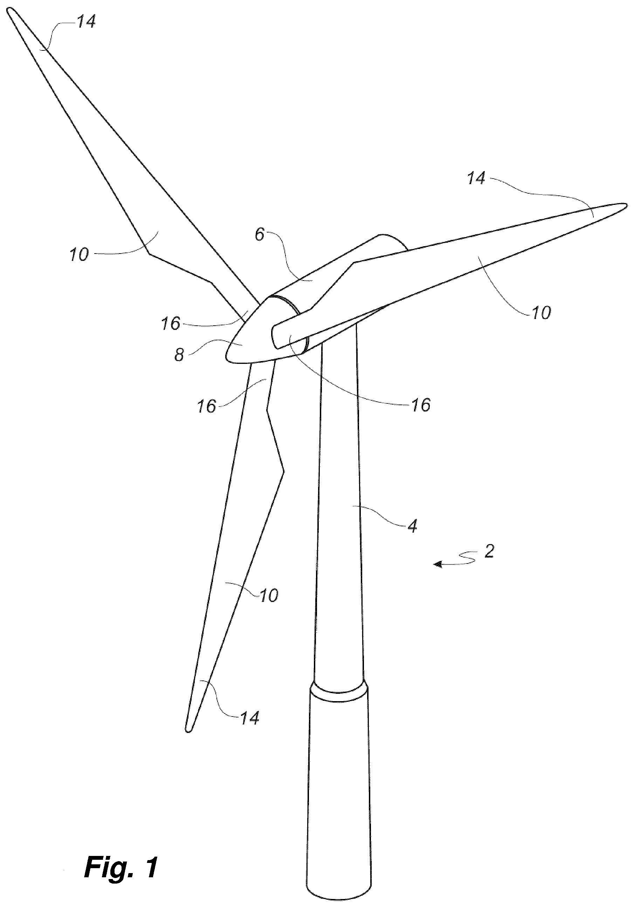

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 farthest from the hub 8. The rotor has a radius denoted R.

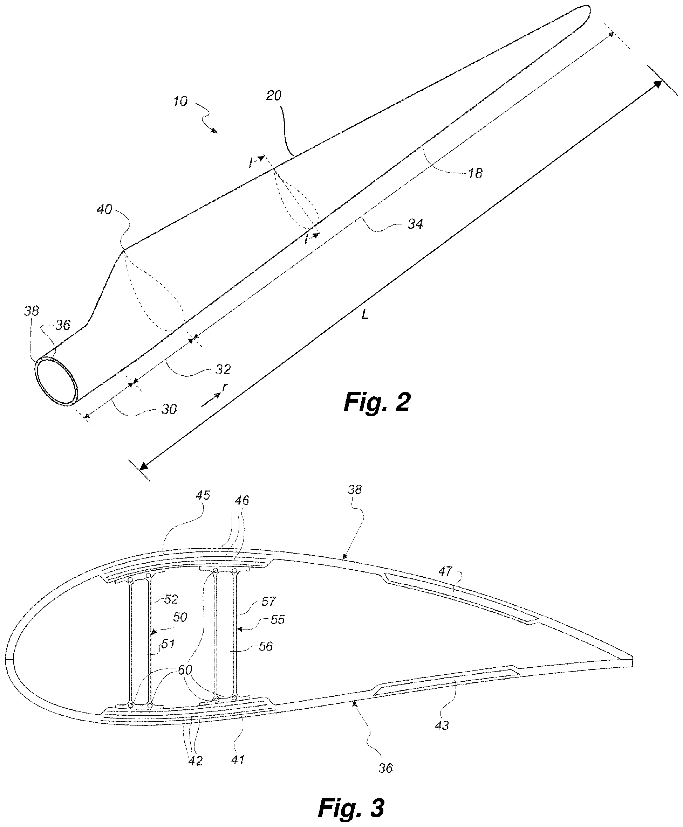

Fig. 2 shows a schematic view of a wind turbine blade 10. The wind turbine blade 10 has the shape of a conventional wind turbine blade and comprises a root region 30 closest to the hub, a profiled or an airfoil region 34 farthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance *r* from the hub. The airfoil region 34 has an airfoil profile with a chord extending between the leading edge 18 and the trailing edge 20 of the blade 10. The width of the chord decreases with increasing distance *r* from the hub.

A shoulder 40 of the blade 10 is defined as the position, where the blade 10 has its largest chord length. The shoulder 40 is typically provided at the boundary between the transition region 32 and the airfoil region 34. Fig. 2 also illustrates the longitudinal extent L, length or longitudinal axis of the blade.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

The blade is typically made from a pressure side shell part 36 and a suction side shell part 38 that are glued to each other along bond lines at the leading edge 18 and the trailing edge of the blade 20.

Fig. 3 shows a schematic view of a cross section of the blade along the line I-I shown in Fig. 2. As previously mentioned, the blade 10 comprises a pressure side shell part 36 and a suction side shell part 38. The pressure side shell part 36 comprises a spar cap 41, also called a main laminate, which constitutes a load bearing part of the pressure side shell part 36. The spar cap 41 comprises a plurality of fibre layers 42 mainly comprising unidirectional fibres aligned along the longitudinal direction of the blade in order to provide stiffness to the blade. The suction side shell part 38 also comprises a spar cap 45 comprising a plurality of fibre layers 46. The pressure side shell part 36 may also comprise a sandwich core material 43 typically made of balsawood or foamed polymer and sandwiched between a number of fibre-reinforced skin layers. The sandwich core material 43 is used to provide stiffness to the shell in order to ensure that the shell substantially maintains its aerodynamic profile during rotation of the blade. Similarly, the suction side shell part 38 may also comprise a sandwich core material 47.

The spar cap 41 of the pressure side shell part 36 and the spar cap 45 of the suction side shell part 38 are connected via a first shear web 50 and a second shear web 55. The shear webs 50, 55 are in the shown embodiment shaped as substantially I-shaped webs. The first shear web 50 comprises a shear web body and two web foot flanges. The shear web body comprises a sandwich core material 51, such as balsawood or foamed polymer, covered by a number of skin layers 52 made of a number of fibre layers. The blade shells 36, 38 may comprise further fibre-reinforcement at the leading edge and the trailing edge. Typically, the shell parts 36, 38 are bonded to each other via glue flanges.

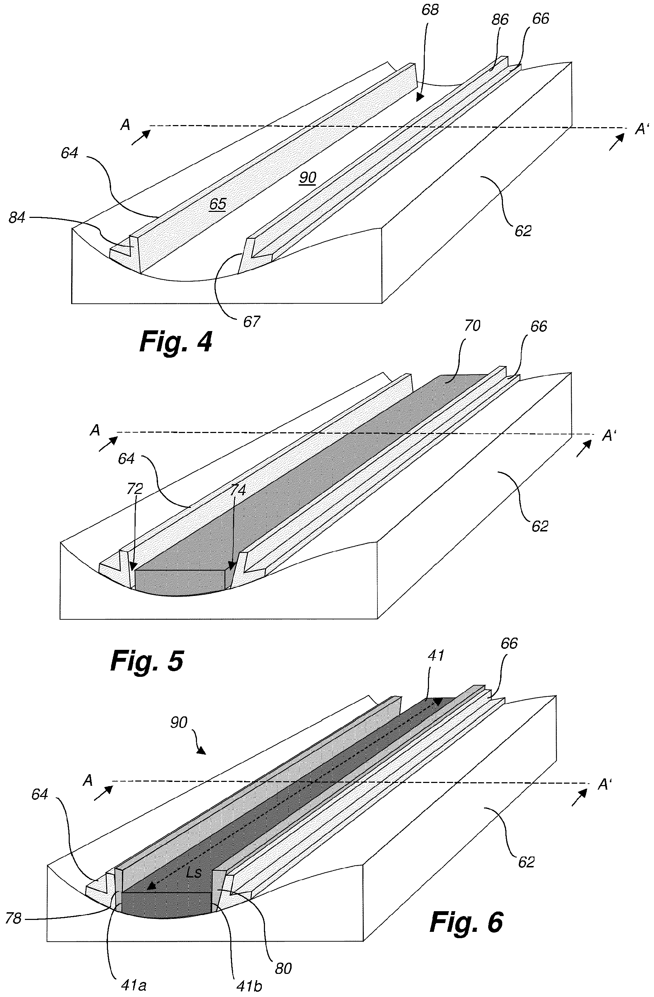

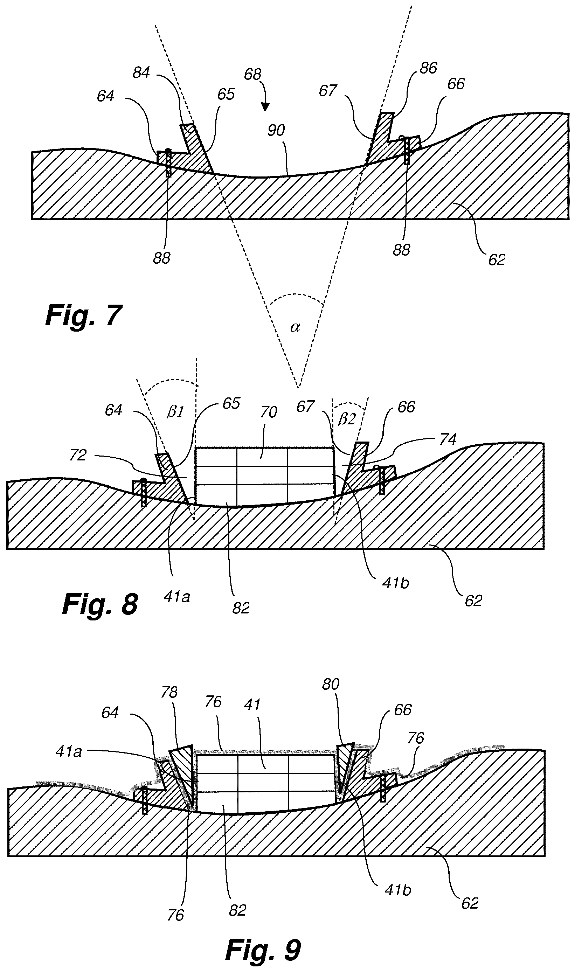

Figs. 4-9 illustrate various steps of the method of the present invention. As seen in Figs. 4 and 7, a first guide member 64 and a second guide member 66, each having a substantially L-shaped cross section, are fastened to the moulding surface 90 of a mould 62. This can be advantageously be done by using bolts 88, as shown in the cross sectional view of Fig. 7. The guide members 64, 66 comprise respective upstands 84, 86 forming respective longitudinally extending guide surface 65, 67. A moulding cavity 68 is provided in between the first and second guide members 64, 66. The first guide member 64 comprises a longitudinally extending guide surface 65, and the second guide member 66 comprises a longitudinally extending guide surface 67 facing the guide surface 65 of the first guide member 64. As best seen in Fig. 7, the guide surface 65 of the first guide member diverges from the guide surface 67 of the second guide member in an upward direction, the planes in which the respective guide surfaces 65, 67 lie forming an angle α.

As illustrated in Figs. 5 and 8, a fibre material 70 is placed within the moulding cavity 68, such that a first gap 72 is provided between the fibre material 70 and the first guide member 64, and a second gap 74 is provided between the fibre material 70 and the second guide member 66. As seen in Fig. 8, the fibre material comprises a plurality of strips 82 of fibre material arranged into adjacent stacks of strips, such as pultruded fibre strips. As best seen in Fig. 8, the fibre material 70 or the final spar cap 41 has first and second longitudinally extending lateral surfaces 41a, 41b, wherein the first guide member 64 comprises a longitudinally extending guide surface 65 forming an acute angle β1 with the first lateral surface 41a of the spar cap, and wherein the second guide member 66 comprises a longitudinally extending guide surface 67 forming an acute angle *β2* with the second lateral surface 41b of the spar cap.

As illustrated in Fig. 9, a vacuum foil 76 is placed over the fibre material 70/41 and the first and second guide members 64, 66, such that the vacuum foil 76 extends into the first and second gap 72, 74. For better visibility, the vacuum foil is omitted in the perspective view in Fig. 6. A first wedge-shaped insert 78 is inserted into the first gap 72 on top of the vacuum foil, and a second wedge-shaped insert 80 is inserted into the second gap 74 on top of the vacuum foil. This can be done by squeezing the first insert 78 into the first gap, and by squeezing the second insert 80 into the second gap. As seen in Fig. 6, the first and second guide members 64, 66 and the first and second inserts 78, 80 extend along substantially the entire length Ls of the spar cap 41.

Then, resin is infused into the fibre material to form a resin-infused fibre material, the resin is cured to form the fibre-reinforced spar cap 41. Subsequently, the first and second inserts 78, 80 and the vacuum foil 76 can be removed and the fibre-reinforced spar cap 41 can be demoulded from the mould 62.

The invention is not limited to the embodiments described herein and may be modified or adapted without departing from the scope of the present invention.

### List of reference numerals

- 4: tower
- 6: nacelle
- 8: hub
- 10: blades
- 14: blade tip
- 16: blade root
- 18: leading edge
- 20: trailing edge
- 30: root region
- 32: transition region
- 34: airfoil region
- 36: pressure side shell part
- 38: suction side shell part
- 40: shoulder
- 41: spar cap
- 42: fibre layers
- 43: sandwich core material
- 45: spar cap
- 46: fibre layers
- 47: sandwich core material
- 50: first shear web
- 51: core member
- 52: skin layers
- 55: second shear web
- 56: sandwich core material of second shear web
- 57: skin layers of second shear web
- 60: filler ropes
- 62: mould
- 64: first guide member
- 65: guide surface
- 66: second guide member
- 67: guide surface
- 68: moulding cavity
- 70: fibre material
- 72: first gap
- 74: second gap
- 76: vacuum foil
- 78: first insert
- 80: second insert
- 82: pultruded strip
- 84: upstand of first guide member
- 86: upstand of second guide member
- 88: bolt
- 90: moulding surface
- L: length
- Ls: length of spar cap
- r: distance from hub
- R: rotor radius

## Claims

1. A method of manufacturing a fibre-reinforced spar cap (41) for a wind turbine blade, the method comprising the steps of:
providing a mould (62),
fastening a first guide member (64) and a second guide member (66) to the mould for providing a moulding cavity (68) in between the first and second guide members,
arranging a fibre material (70) within the moulding cavity, such that a first gap (72) is provided between the fibre material and the first guide member, and a second gap (74) is provided between the fibre material and second guide member,
placing a vacuum foil (76) over the fibre material and the first and second guide members, such that the vacuum foil (76) extends into the first and second gap (72, 74),
inserting a first insert (78) into the first gap (72) on top of the vacuum foil,
inserting a second insert (80) into the second gap (74) on top of the vacuum foil,
infusing resin into the fibre material to form a resin-infused fibre material,
curing the resin-infused fibre material to form the fibre-reinforced spar cap (41),
removing the first and second inserts (78, 80) and the vacuum foil (76), and
demoulding the fibre-reinforced spar cap from the mould.

2. A method according to claim 1, wherein the first guide member (64) comprises a longitudinally extending guide surface (65), and wherein the second guide member (66) comprises a longitudinally extending guide surface (67) facing the guide surface (65) of the first guide member (64), the guide surface (65) of the first guide member diverging from the guide surface (67) of the second guide member in an upward direction.

3. A method according to claim 1, wherein the spar cap (41) has first and second longitudinally extending lateral surfaces (41a, 41b), wherein the first guide member comprises a longitudinally extending guide surface (65) forming an acute angle (β1) with the first lateral surface (41a) of the spar cap, and wherein the second guide member comprises a longitudinally extending guide surface (67) forming an acute angle (β2) with the second lateral surface (41b) of the spar cap.

4. A method according to any of the preceding claims, wherein the step of inserting the first insert (78) into the first gap (72) on top of the vacuum foil comprises squeezing the first insert into the first gap, and wherein the step of inserting the second insert (80) into the second gap (74) on top of the vacuum foil comprises squeezing the second insert into the second gap.

5. A method according to any of the preceding claims, wherein the fibre material comprises a plurality of strips (82) of fibre material arranged into adjacent stacks of strips.

6. A method according to any of the preceding claims, wherein the guide member comprises an upstand (84, 86) forming the longitudinally extending guide surface (65, 67).

7. A method according to any of the preceding claims, wherein the guide member has a substantially L-shaped cross section or a triangular cross section.

8. A method according to any of the preceding claims, wherein the first and second guide members extend along substantially the entire length (Ls) of the spar cap (41).

9. A method according to any of the preceding claims, wherein the first and second guide members are bolted to the mould.

10. A method according to any of the preceding claims, wherein the insert comprises a silicone material.

11. A method according to any of the preceding claims, wherein the insert comprises high density polyethylene (HDPE) and a silicone material.

12. A method according to any of the preceding claims, wherein the insert is substantially wedge-shaped.

13. A method according to any of the preceding claims, wherein the insert has a triangular cross section or a trapezoid cross section.

14. A method according to any of the preceding claims, wherein the inserts extend along substantially the entire length (Ls) of the spar cap.

15. A mould assembly (90) for manufacturing a fibre-reinforced spar cap (41) for a wind turbine blade, the mould assembly comprising
a mould (62),
a first guide member (64) comprising an upstand (84) and a second guide member (66) comprising an upstand (86), the first and second guide members being fastened to the mould for providing a moulding cavity (86) in between the first and second guide members,
a fibre material (70) arranged within the moulding cavity, such that a first gap (72) is provided between the fibre material and the first guide member, and a second gap (74) is provided between the fibre material and second guide member,
a vacuum foil (76) placed over the fibre material and the first and second guide members, such that the vacuum foil (76) extends into the first and second gap (72, 74),a first wedge-shape insert (78) for insertion into the moulding cavity, wherein the first wedge-shape insert is inserted into the first gap (72) on top of the vacuum foil and
a second wedge-shape insert (80) for insertion into the moulding cavity, wherein the second wedge-shape insert is inserted into the second gap (74) on top of the vacuum foil.

## Patentansprüche

1. Verfahren zum Herstellen einer faserverstärkten Holmkappe (41) für einen Windkraftanlagenflügel, wobei das Verfahren folgende Schritte umfasst:
Bereitstellen eines Formwerkzeugs (62),
Befestigen eines ersten Führungselements (64) und eines zweiten Führungselements (66) an dem Formwerkzeug, um eine Formungshöhlung (68) zwischen dem ersten und dem zweiten Führungselement bereitzustellen,
Anordnen eines Fasermaterials (70) in der Formungshöhlung, sodass ein erster Zwischenraum (72) zwischen dem Fasermaterial und dem ersten Führungselement bereitgestellt wird und ein zweiter Zwischenraum (74) zwischen dem Fasermaterial und dem zweiten Führungselement bereitgestellt wird,
Platzieren einer Vakuumfolie (76) über das Fasermaterial und das erste und das zweite Führungselement, sodass sich die Vakuumfolie (76) in den ersten und den zweiten Zwischenraum (72, 74) erstreckt,
Einsetzen eines ersten Einsatzes (78) auf der Vakuumfolie in den ersten Zwischenraum (72),
Einsetzen eines zweiten Einsatzes (80) auf der Vakuumfolie in den zweiten Zwischenraum (74),
Infundieren des Fasermaterials mit Harz, um ein mit Harz infundiertes Fasermaterial zu bilden,
Aushärten des mit Harz infundierten Fasermaterials, um die faserverstärkte Holmkappe (41) zu bilden,
Entfernen des ersten und des zweiten Einsatzes (78, 80) und der Vakuumfolie (76) und
Ausformen der faserverstärkten Holmkappe aus dem Formwerkzeug.

2. Verfahren nach Anspruch 1, wobei das erste Führungselement (64) eine sich längs erstreckende Führungsfläche (65) umfasst und wobei das zweite Führungselement (66) eine der Führungsfläche (65) des ersten Führungselements (64) zugwandte, sich längs erstreckende Führungsfläche (67) umfasst, wobei sich die Führungsfläche (65) des ersten Führungselements in einer Aufwärtsrichtung von der Führungsfläche (67) des zweiten Führungselements entfernt.

3. Verfahren nach Anspruch 1, wobei die Holmkappe (41) eine erste und eine zweite sich längs erstreckende seitliche Oberfläche (41a, 41b) aufweist, wobei das erste Führungselement eine sich längs erstreckende Führungsfläche (65) umfasst, die mit der ersten seitlichen Oberfläche (41a) der Holmkappe einen spitzen Winkel (β1) bildet, und wobei das zweite Führungselement eine sich längs erstreckende Führungsfläche (67) umfasst, die mit der zweiten seitlichen Oberfläche (41b) der Holmkappe einen spitzen Winkel (β2) bildet.

4. Verfahren nach einem der vorangehenden Ansprüche, wobei der Schritt des Einsetzens des ersten Einsatzes (78) auf der Vakuumfolie in den ersten Zwischenraum (72) das Quetschen des ersten Einsatzes in den ersten Zwischenraum umfasst und wobei der Schritt des Einsetzens des zweiten Einsatzes (80) auf der Vakuumfolie in den zweiten Zwischenraum (74) das Quetschen des zweiten Einsatzes in den zweiten Zwischenraum umfasst.

5. Verfahren nach einem der vorangehenden Ansprüche, wobei das Fasermaterial eine Vielzahl von Streifen (82) aus Fasermaterial umfasst, die zu benachbarten Stapeln von Streifen angeordnet sind.

6. Verfahren nach einem der vorangehenden Ansprüche, wobei das Führungselement eine Aufkantung (84, 86) umfasst, die die sich längs erstreckende Führungsfläche (65, 67) bildet.

7. Verfahren nach einem der vorangehenden Ansprüche, wobei das Führungselement einen im Wesentlichen L-förmigen Querschnitt oder einen dreieckigen Querschnitt aufweist.

8. Verfahren nach einem der vorangehenden Ansprüche, wobei sich das erste und das zweite Führungselement entlang im Wesentlichen der gesamten Länge (Ls) der Holmkappe (41) erstrecken.

9. Verfahren nach einem der vorangehenden Ansprüche, wobei das erste und das zweite Führungselement an das Formwerkzeug geschraubt werden.

10. Verfahren nach einem der vorangehenden Ansprüche, wobei der Einsatz ein Silikonmaterial umfasst.

11. Verfahren nach einem der vorangehenden Ansprüche, wobei der Einsatz Polyethylen hoher Dichte (HDPE) und ein Silikonmaterial umfasst.

12. Verfahren nach einem der vorangehenden Ansprüche, wobei der Einsatz im Wesentlichen keilförmig ist.

13. Verfahren nach einem der vorangehenden Ansprüche, wobei der Einsatz einen dreieckigen Querschnitt oder einen trapezförmigen Querschnitt aufweist.

14. Verfahren nach einem der vorangehenden Ansprüche, wobei sich die Einsätze entlang im Wesentlichen der gesamten Länge (Ls) der Holmkappe erstrecken.

15. Formwerkzeuganordnung (90) zum Herstellen einer faserverstärkten Holmkappe (41) für einen Windkraftanlagenflügel, wobei die Formwerkzeuganordnung Folgendes umfasst:
ein Formwerkzeug (62),
ein erstes Führungselement (64), das eine Aufkantung (84) umfasst, und ein zweites Führungselement (66), das eine Aufkantung (86) umfasst, wobei das erste und das zweite Führungselement an dem Formwerkzeug befestigt sind, um eine Formungshöhlung (86) zwischen dem ersten und dem zweiten Führungselement bereitzustellen,
ein Fasermaterial (70), das in der Formungshöhlung angeordnet ist, sodass ein erster Zwischenraum (72) zwischen dem Fasermaterial und dem ersten Führungselement bereitgestellt ist und ein zweiter Zwischenraum (74) zwischen dem Fasermaterial und dem zweiten Führungselement bereitgestellt ist,
eine Vakuumfolie (76), die über das Fasermaterial und das erste und das zweite Führungselement platziert ist, sodass sich die Vakuumfolie (76) in den ersten und den zweiten Zwischenraum (72, 74) erstreckt,
einen ersten keilförmigen Einsatz (78) zum Einsetzen in die Formungshöhlung, wobei der erste keilförmige Einsatz auf der Vakuumfolie in den ersten Zwischenraum (72) eingesetzt ist und
einen zweiten keilförmigen Einsatz (80) zum Einsetzen in die Formungshöhlung, wobei der zweite keilförmige Einsatz auf der Vakuumfolie in den zweiten Zwischenraum (74) eingesetzt ist.

## Revendications

1. Procédé de fabrication d'une semelle de longeron renforcée par des fibres (41) pour une pale d'éolienne, le procédé comportant les étapes consistant à :
mettre en œuvre un moule (62),
attacher un premier élément de guidage (64) et un deuxième élément de guidage (66) sur le moule pour la mise en œuvre d'une cavité de moulage (68) entre les premier et deuxième éléments de guidage,
agencer un matériau à base de fibres (70) à l'intérieur de la cavité de moulage, de telle sorte qu'un premier espace (72) est mis en œuvre entre le matériau à base de fibres et le premier élément de guidage, et qu'un deuxième espace (74) est mis en œuvre entre le matériau à base de fibres et le deuxième élément de guidage,
placer une feuille sous vide (76) sur le matériau à base de fibres et les premier et deuxième éléments de guidage, de telle sorte que la feuille sous vide (76) s'étend jusque dans les premier et deuxième espaces (72, 74),
insérer un premier insert (78) dans le premier espace (72) au-dessus de la feuille sous vide,
insérer un deuxième insert (80) dans le deuxième espace (74) au-dessus de la feuille sous vide,
imprégner de la résine dans le matériau à base de fibres pour former un matériau à base de fibres imprégné de résine,
faire durcir le matériau à base de fibres imprégné de résine pour former la semelle de longeron renforcée par des fibres (41),
retirer les premier et deuxième inserts (78, 80) et la feuille sous vide (76), et
démouler la semelle de longeron renforcée par des fibres du moule.

2. Procédé selon la revendication 1, dans lequel le premier élément de guidage (64) comporte une surface de guidage s'étendant longitudinalement (65), et dans lequel le deuxième élément de guidage (66) comporte une surface de guidage s'étendant longitudinalement (67) orientée vers la surface de guidage (65) du premier élément de guidage (64), la surface de guidage (65) du premier élément de guidage divergeant de la surface de guidage (67) du deuxième élément de guidage dans une direction allant vers le haut.

3. Procédé selon la revendication 1, dans lequel la semelle de longeron (41) a des première et deuxième surfaces latérales s'étendant longitudinalement (41a, 41b), dans lequel le premier élément de guidage comporte une surface de guidage s'étendant longitudinalement (65) pour former un angle aigu (β1) avec la première surface latérale (41a) de la semelle de longeron, et dans lequel le deuxième élément de guidage comporte une surface de guidage s'étendant longitudinalement (67) pour former un angle aigu (β2) avec la deuxième surface latérale (41b) de la semelle de longeron.

4. Procédé selon l'une quelconque des revendications précédentes, dans lequel l'étape consistant à insérer le premier insert (78) dans le premier espace (72) au-dessus de la feuille sous vide comporte l'étape consistant à presser le premier insert jusque dans le premier espace, et dans lequel l'étape consistant à insérer le deuxième insert (80) dans le deuxième espace (74) au-dessus de la feuille sous vide consiste à presser le deuxième insert jusque dans le deuxième espace.

5. Procédé selon l'une quelconque des revendications précédentes, dans lequel le matériau à base de fibres comporte une pluralité de bandes (82) de matériau à base de fibres agencées en piles de bandes adjacentes.

6. Procédé selon l'une quelconque des revendications précédentes, dans lequel l'élément de guidage comporte un montant (84, 86) formant la surface de guidage s'étendant longitudinalement (65, 67).

7. Procédé selon l'une quelconque des revendications précédentes, dans lequel l'élément de guidage a une section transversale sensiblement en forme de L ou une section transversale triangulaire.

8. Procédé selon l'une quelconque des revendications précédentes, dans lequel les premier et deuxième éléments de guidage s'étendent sensiblement sur toute la longueur (Ls) de la semelle de longeron (41).

9. Procédé selon l'une quelconque des revendications précédentes, dans lequel les premier et deuxième éléments de guidage sont boulonnés sur le moule.

10. Procédé selon l'une quelconque des revendications précédentes, dans lequel l'insert comporte un matériau à base de silicone.

11. Procédé selon l'une quelconque des revendications précédentes, dans lequel l'insert comporte du polyéthylène haute densité (PEHD) et un matériau à base de silicone.

12. Procédé selon l'une quelconque des revendications précédentes, dans lequel l'insert est de forme sensiblement cunéiforme.

13. Procédé selon l'une quelconque des revendications précédentes, dans lequel l'insert a une section transversale triangulaire ou une section transversale trapézoïdale.

14. Procédé selon l'une quelconque des revendications précédentes, dans lequel les inserts s'étendent sensiblement sur toute la longueur (Ls) de la semelle de longeron.

15. Ensemble formant moule (90) servant à fabriquer une semelle de longeron renforcée par des fibres (41) pour une pale d'éolienne, l'ensemble formant moule comportant
un moule (62),
un premier élément de guidage (64) comportant un montant (84) et un deuxième élément de guidage (66) comportant un montant (86), les premier et deuxième éléments de guidage étant attachés sur le moule pour la mise en œuvre d'une cavité de moulage (86) entre les premier et deuxième éléments de guidage,
un matériau à base de fibres (70) agencé à l'intérieur de la cavité de moulage, de telle sorte qu'un premier espace (72) est mis en œuvre entre le matériau à base de fibres et le premier élément de guidage, et qu'un deuxième espace (74) est mis en œuvre entre le matériau à base de fibres et le deuxième élément de guidage,
une feuille sous vide (76) placée sur le matériau à base de fibres et les premier et deuxième éléments de guidage, de telle sorte que la feuille sous vide (76) s'étend jusque dans les premier et deuxième espaces (72, 74),
un premier insert de forme cunéiforme (78) destiné à être inséré dans la cavité de moulage, dans lequel le premier insert de forme cunéiforme est inséré dans le premier espace (72) au-dessus de la feuille sous vide et
un deuxième insert de forme cunéiforme (80) destiné à être inséré dans la cavité de moulage, dans lequel le deuxième insert de forme cunéiforme est inséré dans le deuxième espace (74) au-dessus de la feuille sous vide.
